Europäisches Patentamt

European Patent Office

Office européen des brevets

(11) Publication number: **0 090 453**
A1

# EUROPEAN PATENT APPLICATION

(21) Application number: 83200386.7

(51) Int. Cl.³: **F 16 B 35/00**

(22) Date of filing: **22.03.83**

(30) Priority: **31.03.82 IT 2140082 U**

(71) Applicant: **A. AGRATI S.p.A., Via Piave 28-30, I-20050 Veduggio con Colzano (Milan) (IT)**

(43) Date of publication of application: **05.10.83 Bulletin 83/40**

(72) Inventor: **Agrati, Carlo, Via Piave 28-30, I-20050 Veduggio con Colzano Milan (IT)**

(84) Designated Contracting States: **AT BE CH DE FR GB LI LU NL SE**

(74) Representative: **Martegani, Franco et al, Ing. Barzanò & Zanardo Milano S.p.A. Via Borgonuovo, 10, I-20121 Milano (IT)**

(54) **A bolt calibrated to effect simultaneous centering and locking of two pieces.**

(57)    A calibrated bolt with at least one threaded portion (12) and at least one calibrated centering ridge (13), comprising a sinusoidal ribbing flattened at its crest.

0090453

"A BOLT CALIBRATED TO EFFECT SIMULTANEOUS CENTERING
AND LOCKING OF TWO PIECES."

It is known that a normal bolt will not ensure centering of the pieces locked together, in that it enters a hole of diameter larger than the diameter of the shank.

To permit centering of the pieces locked together, it is known to use so called calibrated bolts  featuring ridges of diameter corresponding to the diameter of the hole at the base of the desired connection, with precision up to degree 6 and maximum roughness of 0.8 micrometres, obtained by removal of material (for example by grinding or lathing).  The bolt sometimes serves as a pin or bar proper, in which case the non-threaded surface of the shank  is processed to remove material from it, and has the same nominal diameter as the hole.

Such processing of the ridges, or of the entire non-threaded surface of the shank, is relatively complicated and laborious, and thus also costly.

The object of the present invention is to embody a calibrated bolt such as has a structure which does not call for any removal of material; the bolt according to the invention can consequently be produced with costs much lower than in the production of calibrated bolts of the aforesaid type, and will ensure precision up to degree 6 and a maximum roughness of 0.8 micrometres.

In order to attain the said object, the present invention embodies a calibrated bolt with at least one threaded portion and at least one calibrated centering ridge, characterized by the fact that said ridge, or collar, comprises a sinusoidal ribbing flattened at its crest.

The bolt according to the present invention also features a non-flattened sinusoidal ribbing proximal to its head; this serves to position the bolt in a stable manner in the hole of the piece before another threaded piece is screwed onto it.

A bolt possessing the special characteristics as mentioned above can clearly be produced rapidly and economically by rolling operations on the thread and ribbings and a subsequent flattening operation on the crests of at least one ribbing, by drawing through an appropriately sized die.

The structural and functional characteristics of the invention, and its advantages over the known art, will be more readily seen from the following description referred to the attached drawings, in which:

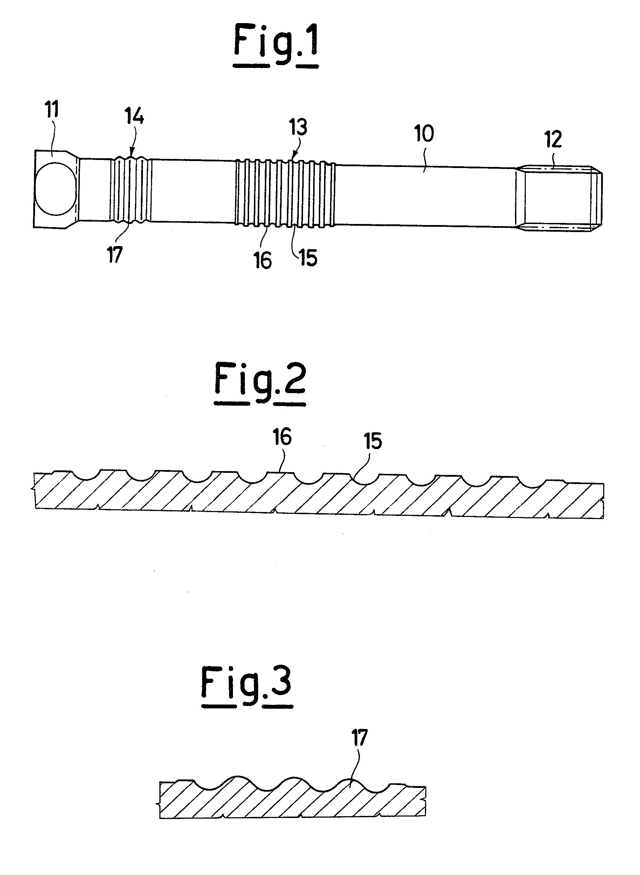

FIGURE 1 is a longitudinal elevation showing a calibrated bolt embodied according to the principles of the invention;

FIGURE 2 is an enlarged particular showing the flattened-crest sinusoidal ribbing;

FIGURE 3 is an enlarged particular showing the non-flattened ribbing.

With reference to the drawings, the bolt according to the invention comprises a shank 10, a head 11, a threaded portion 12 and two ridges 13, 14.

The ridge 13 has centering calibration and comprises a plurality of ribbings 15 in sinusoidal progression, the crests of said ribbings being flattened by means of cold-drawing to ensure a degree 6 precision and a maximum roughness of 0.8 micrometres.

The ridge 14 enables the bolt to be fitted in a stable manner into the hole of a piece comprises ribbings 17, also in sinusoidal progression as in the case of the aforesaid ribbings but with rounded crests for forcing into said hole.

As stated above, the threading and ribbings of the bolt according to the present invention can be carried out by means of one or more rolling operations.

0090453

CLAIMS :

1.      A calibrated bolt with at least one threaded portion (12) and at least one calibrated centering ridge (13), characterized by the fact that said ridge (13) comprises a sinusoidal ribbing flattened at its crest.

2.      A bolt according to Claim 1, characterized by the fact that it comprises, proximally to the head, a second sinusoidal ribbing (14) with non-flattened crests.

# Fig.1

11 14 13 10 12

17 16 15

# Fig.2

16 15

# Fig.3

17

## EUROPEAN SEARCH REPORT

European Patent Office

# DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | DE-C- 590 969 (NODIERE) <br> * Figure 1 * | 1 | F 16 B 35/00 |
| Y | DE-C- 674 315 (BAUER & SCHAURTE) <br> * Figure 1 * | 1 | |
| Y | FR-A-2 268 975 (YOSHIDA KOGYO) <br> * Figure 2 * | 1,2 | |
| Y | GB-A- 762 333 (PLACE) <br> * Figure 1 * | 1 | |
| Y | GB-A-1 121 950 (NYDQVIST & HOLM) <br> * Figure 1 * | 1 | |
| Y | GB-A-1 352 599 (TOKAI COLD FORMING CO.) <br> * Figure 4 * | 1 | TECHNICAL FIELDS SEARCHED (Int. Cl. 3) <br><br> F 16 B 35/00 |
| Y | GB-A-1 392 513 (BRANDER) <br> * Figure 1 * | 1,2 | |
| Y | US-A-3 455 587 (GALLOIS) <br> * Figures 2, 6 * | 1,2 | |

The present search report has been drawn up for all claims

| Place of search BERLIN | Date of completion of the search 09-06-1983 | Examiner ZAPP E |
|---|---|---|